(19) Europäisches Patentamt
European Patent Office
Office européen des brevets

(11) **EP 4 062 888 A1**

(12) **EUROPEAN PATENT APPLICATION**
published in accordance with Art. 153(4) EPC

(43) Date of publication:
**28.09.2022 Bulletin 2022/39**

(21) Application number: **20891162.8**

(22) Date of filing: **02.11.2020**

(51) International Patent Classification (IPC):
***A61H 5/00*** (2006.01)

(52) Cooperative Patent Classification (CPC):
**A61H 5/00**

(86) International application number:
**PCT/CN2020/125906**

(87) International publication number:
**WO 2021/098498 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.11.2019 CN 201911139300**
**20.11.2019 CN 201911140281**
**20.11.2019 CN 201911140282**
**20.11.2019 CN 201911140283**

(71) Applicant: **Precision Sight (Beijing) Medical Technology Co., Ltd.**
**Shunyi District, Beijing 101300 (CN)**

(72) Inventors:
• **PU, Mingliang**
**Beijing 101300 (CN)**
• **HUANG, Xin**
**Beijing 101300 (CN)**

(74) Representative: **Vossius & Partner Patentanwälte Rechtsanwälte mbB**
**Siebertraße 3**
**81675 München (DE)**

(54) **VISUAL FUNCTION ADJUSTMENT METHOD AND APPARATUS**

(57) A visual function adjustment method and apparatus, and a virtual reality head-mount display device. The method comprises: respectively performing imaging in both eyes of a user so as to respectively display corresponding preset images in corresponding localized areas of the eyes, and enabling a present time interval $\alpha$ to be provided between the respective imaging times of the corresponding preset images in the eyes, wherein each localized area corresponds to a localized retinal injury of one of the eyes; and the imaging time of one preset image in the corresponding eye with the localized retinal injury is earlier than the imaging time of the present image in the other eye by the time interval $\alpha$.

Present images on both sides of the user's eyes respectively to display corresponding preset images in corresponding local regions of the two eyes respectively, and make the corresponding preset images have a preset value between the respective presenting times of the two eyes the time interval $\alpha$ ;

Wherein the local area corresponds to a partial retinal damage in one of the eyes, and the time when the preset image is imaged in one eye corresponding to the partial retinal damage is earlier than the time when the preset image is imaged in the other eye time interval $\alpha$

FIG 4

Processed by Luminess, 75001 PARIS (FR)

# Description

## PRIORITY CLAIMS AND REFERENCE TO RELATED APPLICATIONS

This PCT patent application claims priorities to the following Chinese patent applications:

Chinese application number CN201911139300.7 filed November 20, 2019 and entitled "A visual function adjustment method and device, and a virtual reality head-mounted display device";

Chinese application number CN201911140281.X filed November 20, 2019 and entitled "Multi-region viewing function adjustment method and device, virtual reality head-mounted display device";

Chinese application number CN201911140282.4 filed November 20, 2019 and entitled "Bilateral Eye Vision Function Adjustment Method and Device, Virtual Reality Head-mounted Display Device";

Chinese application number CN201911140283.9 filed November 20, 2019 and entitled "A method and device for adjusting visual function using graph sequence".

This PCT patent application claims the priority of the above four Chinese patent applications, and incorporates by reference the entire documents of the above four Chinese patent applications as part of this PCT patent application.

## TECHNICAL FIELD

The present application relates to the field of electronic technology, and in particular, to a visual function adjustment method and device, and a virtual reality head-mounted display device (HMD).

## BACKGROUND

Eye vision is undoubtedly extremely important, and the retina is a vital part of imaging in an eye. Each binocular cell in the visual cortex receives input from the retinas of the left and right eyes. The visual images formed by the retina of an eye are encoded by neurons in different visual centers to form neural images in the visual cortex. Human visual perception relies heavily on the latter. The visual cortex neural circuit has strong plasticity, and appropriate visual stimulation on the retina can gradually restore the visual function of the neural circuit in the corresponding cortical area. The retina is divided into a foveal and a peripheral area; the foveal is the area of the retina where vision (color discrimination, resolution) is most acute. Taking people as an example, there is a yellow area called the macula about 3.5mm from the temporal side of the optic disc, and the depression in the center of the macula is the fovea. It is currently found that many ophthalmic diseases such as glaucoma, AMD, RP (retinitis pigmentosa) and DR (diabetic retinopathy) can cause localized retinal lesions due to various reasons, the corresponding visual field areas of the cerebral cortex were unable to form normal neural images.

In the entire text of this application, the area with localized damage to the retina is defined as: at least a part of the retina is damaged, rather than the entire retina is damaged; and "at least a part" means that one or more of the retina is damaged at localized damage to the area.

Since localized retinal damage and lesions in the retina can cause the corresponding part of the cerebral cortex within the visual field to fail to form normal neural images, there is no method and device for adjusting visual function in the prior art for such problems.

## SUMMARY

In view of the above problems, the purpose of the embodiments of the present application is to provide a visual function adjustment method and device, and a virtual reality head-mounted display device, which can improve and restore the visual function abnormality in the corresponding region of the cerebral cortex caused by subregional retinal damage. And then achieve the purpose of stimulating the retina to regulate the neural circuit of the brain to adjust the visual function.

In one aspect, one embodiment of the present application provides a visual function adjustment method, including:

Perform imaging on both sides of the user's eyes respectively to display corresponding preset images in corresponding localized areas of the two eyes respectively, and make the corresponding preset images have a preset value between the respective imaging times of the two eyes the time interval α;

Wherein the localized area corresponds to a subregional retinal damage in one of the eyes, and the time when the preset image is imaged in one eye corresponding to the subregional retinal damage is earlier than the time when the preset image is imaged in the other eye time interval α.

In some embodiments, performing imaging on both eyes of the user to display corresponding preset images respectively in corresponding subregional regions of the two eyes, including:
Use the video streams to image the two eyes respectively, and the corresponding frames of the video streams of the two eyes include corresponding preset images corresponding to the corresponding localized area positions; and the corresponding frames of the video streams of the two eyes There is a preset time interval α, so that the preset images of the corresponding frames in the video streams of the two eyes, the imaging time of the corresponding one eye with subregional retinal damage is longer than that of the preset image in the other eye The time of imaging is earlier than the time interval $\alpha$.

In some embodiments, the method includes: determine the working frequency f of the device for playing the preset image, and determine the time interval $\alpha$ according to the working frequency;

$$\alpha = n \times 1/f;$$

where $n \geq 1$.

In some embodiments, the method includes: the frames of each video stream have intervening frames, and the corresponding intervening frames of the video streams of the two sides have the same time interval $\alpha$.

In some embodiments, the inserted frame is a blank image frame; or the inserted frame is a frame of a specific image, and the specific image is different from the preset image.

In some embodiments, the method further includes:

when the preset image is played, a prompt is output, and feedback from the user for the prompt is received, and the user's concentration is determined according to the feedback.

In some embodiments, the method includes: The prompt is a recognizable image, or the prompt is a recognizable sound.

In some embodiments, the localized area is determined by:

Set P points in the non-central area of the visual field of one eye, and the display luminance interval of each point;

A fixation target is presented at the foveal area of the visual field of one eye of the user, and the user is asked to fixate at the target; then the brightness is continuously adjusted at any of the P number of points to determine whether the user is reached a brightness threshold of the point;

Determine the difference between luminance thresholds of the two eyes at the same corresponding point, and use the luminance difference in the corresponding points of the two eyes to determine the localized area corresponding to the regional retinal damage.

In one aspect, an embodiment of the present invention provides a method for adjusting the binocular visual function, including: when both eyes have regional retinal damage, determine each regional retinal damage in both eyes separately, and perform the following steps for each regional retinal damage:

Present images on both sides of the user's eyes respectively to display corresponding preset images in corresponding localized areas of the two eyes respectively, and make the corresponding preset images have a time interval $\alpha$ between the respective imaging times of the two eyes;

Wherein the localized area corresponds to a subregional retinal damage in one of the eyes, and the time when the preset image is imaged in one eye corresponding to the subregional retinal damage is earlier than the time when the preset image is imaged in the other eye by time interval $\alpha$.

In some embodiments, the method includes:

Determine the scope of the regional retinal damage of the first eye, and determine the first subregional area where the first preset image is displayed in both eyes according to the scope; determine the scope of the regional retinal damage of the second eye, and determine the second subregional area where the second preset image is displayed in both eyes according to the scope;

For the first subregional region and the second subregional region, respectively, perform the following steps:

Present images on both eyes of the user respectively to display the same first preset image in the corresponding first subregional regions of the retinas of the two eyes respectively, and make the first preset image presented at the two respective eyes with a preset time interval $\alpha$; and the time when the first preset image is presented in one eye corresponding to the first regional retinal damage is earlier than the time when the preset image is imaged in the other eye by time interval $\alpha$;

Present images on both eyes of the user respectively to display the same second preset image in the corresponding second subregional regions of the retinas of the two eyes respectively, and make the second preset image presented at the two respective eyes with a preset time interval $\alpha$; and the time when the second preset image is presented in one eye corresponding to the second subregional retinal damage is earlier than the time when the preset image is imaged in the other eye by time interval $\alpha$;

In some embodiments, the method includes:

For the first regional area, imaging is performed on both eyes of the user respectively to display the same first preset image on the corresponding first subregional areas of the two eyes respectively;

After completing the adjustment of the visual function of the eyes on both sides of the first subregional area, for the second subregional area, imaging is performed on both eyes of the user to display the same second prediction in the corresponding second subregional areas of the two eyes, respectively.

In some embodiments, the method includes: The first subregional region is imaged on both eyes of the user by the preset device, so that the same first preset image is displayed in the corresponding first subregional regions of the two eyes respectively, and after the alternating time interval $\beta$, the second subregional region is imaged respectively. The user's eyes are respectively imaged by the preset device to display the same second preset image respectively in the corresponding second subregional regions of the two eyes, and last for alternating time intervals $\beta$; where time interval $\alpha \geq$ alternate time interval $\beta$.

In some embodiments, the method includes: the first preset image and the second preset image are the same but have different positions; or, the first preset image and the second preset image are different in image. location.

In some embodiments, the localized area is determined by setting P number of points in the non-foveal area of the visual field of one eye, and the luminance range of each point; a fixation target is displayed for the foveal area of the visual field of one eye of the user, and the user is asked to fixate at the fixation target; then the luminance is continuously adjusted at any of the P points to determine whether the user is reached luminance threshold at the point; determine the difference between the luminance of the two eyes at the same corresponding point, and use the luminance difference in the corresponding points of the two eyes to determine the localized area corresponding to the regional retinal damage.

In one aspect, an embodiment of the present invention provides a method for adjusting a multi-region viewing function, including:

Determine the scope of localized retinal damage in one eye, and divide the scope into N subregional retinal damage areas;

Determine N localized areas corresponding to the N localized retinal damage areas respectively: the first localized area, the second localized area... the $N^{th}$ localized area; $N \geq 2$;

For one of these subregional areas, perform the following steps:
Perform imaging on both eyes of the user to display corresponding preset images in corresponding subregional areas of both eyes respectively, and make the corresponding preset images have a preset in-

terval time $\alpha$ between the respective imaging times of both eyes.

Wherein the localized area corresponds to a subregional retinal damage in one of the eyes, and the time when the preset image is imaged in one eye corresponding to the subregional retinal damage is earlier than the time interval $\alpha$ when the preset image is imaged in the other eye.

In some embodiments, the user's eyes are imaged respectively to display corresponding preset images in corresponding subregional regions of both eyes respectively, and the corresponding preset images are imaged on both sides of the eyes respectively. There is a preset time interval $\alpha$ between times, including:

Perform imaging on both eyes of the user respectively to display the corresponding nth preset image in the corresponding $n^{th}$ subregional regions of the retinas of the two eyes respectively, and make the corresponding $n^{th}$ preset image in the two eyes respectively. There is a preset time interval $\alpha$ between the times; and the imaging time of the corresponding $n^{th}$ preset image in the corresponding one eye with the $n^{th}$ subregional retinal damage is earlier than that of the corresponding $n^{th}$ preset image in the other eye, where $1 \leq n \leq N$;

Perform imaging on both eyes of the user to display the corresponding $n+1^{th}$ preset images in the corresponding $n+1^{th}$ localized subregions of the retinas of the two eyes respectively, and make the corresponding $n+1^{th}$ preset images. There is a preset time interval $\alpha$ between the respective imaging times of the two eyes; and the imaging time of the corresponding $n+1^{th}$ preset image in the corresponding one eye with the $n+1^{th}$ subregional retinal damage is earlier than that of the corresponding the $n+1^{th}$ preset map is imaged in the other eye by time interval $\alpha$.

In some embodiments, the method includes: With respect to the $n^{th}$ subregional area, imaging is performed on both eyes of the user respectively to display the corresponding $n^{th}$ preset image in the corresponding $n^{th}$ subregional area of the two sides of the eyes, respectively; after completing the adjustment of the visual function of both sides of the $n^{th}$ subregional area, for the $n+1^{th}$ subregional area, the user's two eyes are respectively imaged to display the corresponding images in the $n+1^{th}$ subregional area of the two eyes, respectively.

In some embodiments, the method includes: The $n^{th}$ subregional region is imaged on both eyes of the user by the preset device to display the corresponding nth preset image respectively in the corresponding subregional regions of the two eyes, and after the alternating time interval $\beta$ continues, the $n+1^{th}$ The subregional area is imaged on both eyes of the user by the preset device to display the corresponding n+1th preset image in the corresponding subregional area of the two eyes respectively, and last for alternating time intervals β; where time interval α ≥ alternate time interval β.

In some embodiments, the method includes:

The nth preset image is the same as the n+1th preset image and has a different location;

or

The nth preset image and the n+1th preset image have different images and positions.

In some embodiments, the localized area is determined by:

set P points in the non-foveal area of the visual field of one eye, and the display luminance interval of each point;

A fixation target is displayed at the foveal area of the visual field of one eye of the user, and the user is asked to fixate at the target; then the luminance is continuously adjusted at any of the P points to determine whether the user is at the threshold level of the luminance value at the point;

Determine the luminance difference of the two eyes at the same corresponding point, and use the luminance difference in the corresponding points of the two eyes to determine the localized area corresponding to the subregional retinal damage.

In one aspect, an embodiment of the present invention provides a method for adjusting a multi-region viewing function, including:

Determine the scope of subregional retinal damage in one eye, and divide the scope into N subregional retinal damage areas;

Determine N subregional areas corresponding to the N subregional retinal damage areas respectively: the first localized area, the second localized area... the Nth localized area; N≥2;

For one of these localized areas, perform the following steps:

Perform imaging on both eyes of the user to display corresponding preset images in corresponding localized areas of both eyes respectively, and make the corresponding preset images have a preset time between the respective imaging times of both eyes by time interval α;

Wherein the localized area corresponds to a subregional retinal damage in one of the eyes, and the time when the preset image is imaged in one eye corresponding to the subregional retinal damage is earlier than the time when the preset image is imaged in the other eye time interval α.

In some embodiments, the user's eyes are respectively imaged to display corresponding preset images in corresponding subregional areas of both eyes respectively, and the corresponding preset images are imaged on the two eyes respectively. There is a preset time interval α between the times, including:

Perform imaging on both eyes of the user respectively to display the corresponding nth preset image in the corresponding nth subregional regions of the retinas of the two eyes respectively, and make the corresponding nth preset image presentations in the two eyes, respectively. There is a preset time interval α between the times; and the imaging time of the corresponding nth preset image in the corresponding one eye with the nth subregional retinal damage is earlier than that of the corresponding nth preset image in the other eye; where 1≤n≤N;

Perform imaging on both eyes of the user to display the corresponding n+1th preset images in the corresponding n+1th subregional regions of the retinas of the two eyes respectively, and make the corresponding n+1th preset images. There is a preset time interval α between the respective imaging times of the two eyes; and the imaging time of the corresponding n+1th preset image in the corresponding one eye with the n+1th subregional retinal damage is earlier than that of the corresponding n+1th preset image in the other eye.

In some embodiments, the method includes:

With respect to the nth subregional area, imaging is performed on both eyes of the user respectively to display the corresponding nth preset image in the corresponding nth subregional area of the two sides of the eyes, respectively;

After completing the adjustment of the visual function of both sides of the nth subregional area, for the n+1th subregional area, the user's two eyes are respectively imaged to display the corresponding images in the n+1th subregional area of the two eyes, respectively.

In some embodiments, the method includes: The nth subregional region is imaged on both eyes of the user by the preset device to display the corresponding nth preset image respectively in the corresponding subregional regions of the two eyes, and after the alternating time interval β continues, the n+1th subregional area is

imaged on both eyes of the user by the preset device, so as to display the corresponding n+1th preset image in the corresponding subregional area of the two eyes respectively, and last for alternating time intervals β; where time interval α ≥ alternate time interval β.

In some embodiments, the method includes:

the nth preset image is the same as the n+1th preset image and has a different location;

or

the nth preset image and the n+1th preset image have different images and positions.

In some embodiments, the localized area is determined by:

Set P number of points in the non-foveal area of the visual field of one eye, and display range of brightness for each point;

A fixation target is displayed for the foveal area of the visual field of one eye of the user, and the user is asked to fixate at the fixation target; then the brightness is continuously adjusted at any of the P points to determine the luminance threshold of the user.

Determine the difference between the luminance threshold of the two eyes at the same corresponding point, and use the luminance difference in the corresponding points of the two eyes to determine the localized area corresponding to the subregional retinal damage.

Determine the difference between the luminance of the two eyes at the same corresponding point, and use the luminance difference in the corresponding points of the two eyes to determine the localized area corresponding to the subregional retinal damage.

In one aspect, an embodiment of the present invention provides a visual function adjustment method using a graph sequence, including:

determine the positions of M subregional retinal damages, M≥2; use the graph sequence to respectively perform vision adjustment on the positions of m subregional retinal damages in the M subregional retinal damages, M≥m≥2;

wherein in the graph sequence at least m sub-image sequences are included, and each sub-image sequence in the m-segment sub-image sequence corresponds to one subregional retinal injury among M subregional retinal injuries;

The visual adjustment is performed on the positions of m subregional retinal lesions among the M subregional retinal lesions by using a graph sequence, including:

Using the image sequence to perform imaging on both eyes of the user, respectively, to display the corresponding preset images in the corresponding localized areas of the two eyes, and to make the corresponding preset images to be imaged at the respective times of the two eyes. There is a preset time interval α between;

wherein the localized area corresponds to a subregional retinal damage in one of the eyes, and the time when the preset image is presented in one eye corresponding to the subregional retinal damage is earlier than the time when the preset image is presented in the other eye by interval time α.

In some embodiments, the m subregional retinal lesions are located on one eye, or the m subregional retinal lesions are located on both eyes, respectively.

In some embodiments, the image sequence is used to perform imaging on both sides of the user's eyes respectively, so as to display corresponding preset images in corresponding subregional regions of the two eyes respectively, and make the corresponding preset images, there is a preset time interval α between the respective imaging times of the two eyes, including:

Using the image sequence to perform imaging on both eyes of the user, respectively, to display the corresponding nth preset image in the corresponding nth localized area of the retina of the two eyes, and make the corresponding nth preset image in the preset time interval α between the respective imaging times of the two eyes; and the imaging time of the corresponding nth preset image in the corresponding one eye with the nth retinal subregional damage is earlier than that of the corresponding nth preset image. The image is presented in the other eye later by the time interval α; where 1≤n≤m;

Perform imaging on both eyes of the user to display the corresponding n+1th preset images in the corresponding n+1th localized regions of the retinas of the two eyes respectively, and make the corresponding n+1th preset images. There is a preset time interval α between the respective imaging times of the two eyes; and the imaging time of the corresponding n+1th preset image in the corresponding one eye with the n+1th subregional retinal damage is earlier than that of the corresponding n+1th preset image presented in the other eye by time interval α.

In some embodiments, the method includes:

For the nth subregional area, imaging is performed on both eyes of the user respectively to display the corresponding nth preset image in the corresponding nth subregional area of the two sides of the eyes

respectively;

after completing the adjustment of the visual function of both sides of the $n^{th}$ subregional area, for the $n+1^{th}$ subregional area, the user's two eyes are imaged respectively to display the corresponding $n+1^{th}$ subregional areas of the two eyes, respectively.

In some embodiments, the method includes: For the $n^{th}$ subregional area, the user's eyes are imaged respectively to display the corresponding $n^{th}$ preset images in the corresponding subregional areas of the two eyes, and after the alternating time interval $\beta$, the $n+1^{th}$ subregional area is passed through. The preset device performs imaging on the user's eyes respectively to display the corresponding $n+1^{th}$ preset image in the corresponding subregional regions of the two eyes, and continues the alternating time interval $\beta$; where time interval $\alpha \geq$ alternate time interval $\beta$.

In some embodiments, the method includes:

the $n^{th}$ preset image is the same as the $n+1^{th}$ preset image and has a different location;

or

the $n^{th}$ preset image and the $n+1^{th}$ preset image have different images and positions.

In some embodiments, the method further includes:
A prompt is output when the sequence of pictures is played, and feedback from the user for the prompt is received, and the user's concentration is determined according to the feedback.

In some embodiments, the method includes: Each of the graph sequences has interpolated frames, and the corresponding interpolated frames of the graph sequences of the two eyes have the same time interval $\alpha$ between them.

As mentioned above, the protocols in the examples of the present application do not treat damage to the retina itself. Each point on the binocular area of the retina has a corresponding representative area on the visual cortex; and the representative area gradually becomes larger as the degree of eccentricity decreases. The representative area of the fovea is maximized (the 0-0.5° foveal area corresponds to the 142mm$^2$ area of the primary visual cortex!); at this moment, each point on the fovea is a large representative area in the visual cortex. However, the utilization rate of this area is not very high under normal circumstances, so the embodiment of the present application can adjust the vision. In the embodiments of the present application, the visual cortex neural circuit corresponding to the retinal damage area can be regulated, so that the synapses of the neurons in this circuit can be reshaped, so that the input provided by a small number of remaining retinal neurons can be efficiently used, and finally, to a certain extent Reconstruction of visual function.

## BRIEF DESCRIPTION OF DRAWINGS

FIG 1 is the principle schematic diagram of binocular parallax;

FIG 2 is the principle schematic diagram of binocular fixation;

FIG 3 is a schematic diagram of determining a predetermined area of a display image according to localized retinal damage;

FIG 4 is a schematic flowchart of a method for adjusting a visual function in an embodiment of the present application;

FIG 5 is a schematic structural diagram of a device for adjusting a visual function in an embodiment of the present application;

FIG 6 is a schematic structural diagram of a virtual reality head-mounted display device in an embodiment of the present application.

## DETAILED DESCRIPTION

To make the technical problems, technical solutions, and advantages to be solved by the present application clearer, the following will be described in detail with reference to the accompanying drawings and specific embodiments.

The retina will have localized lesions due to various reasons, so that the position corresponding to the localized retinal damage in the visual field cannot be imaged. In the prior art, the problem of visual impairment caused by subregional retinal damage is mostly to eliminate the subregional retinal damage by means of drug and surgical treatment, and to treat or eliminate in this way. The inventor found in the research that the vision can be adjusted noninvasively by means of visual stimulation to gradually improve or restore the vision.

The principle of the present application will be explained first: the stereoscopic vision of people's binocular is formed in this way: both eyes are fixed on an object at the same time, and the eyes of both eyes intersect at a point, which is called a fixation point, and the reflection from the fixation point returns to the retinas of the left and right eyes. The light point is called the corresponding point *(Corresponding Point)*. Since there is a distance between the two pupils of a person (the average value is 50-75mm), the relative positions of the left and right eyes are different for the same scene, which leads to different perspectives for the eyes to see external objects, which results in *Binocular Disparity,* that is, the left and right eyes see images with different viewing angles. This visual information from both eyes is transferred to the primary visual cortex through the lateral geniculate body, and then processed and integrated by the visual centers at all levels to obtain a neural image with a sense of three-dimensional depth. Specifically, once the eyes focus on the fixation point, not only can this point be clearly seen, but also the distance, depth, convexity and concavity, contrast, chromatic aberration, contour, etc. between this point and surrounding objects can be distinguished. The image is a stereoscopic image, and the stereoscopic function of people's binocular vision is referred to as stereopsis (*Stereopsis*).

Stereoscopic vision gives a sense of depth to one's perception of the surrounding visual world. Specifically, the eyes have the ability to perceive the depth of the captured external image *(Depth Perception),* and this ability is based on the depth information *(Depth Cue)* that the left and right eyes can extract from the scene. The reason why the human eye can have these capabilities mainly depends on the following four basic functions of the eyes:

### 1. Binocular Disparity

Binocular parallax describes the difference in perspective that occurs at the horizontal position where the image of the object falls on the retinas of both eyes when the left and right eyes stare at the same object due to the distance between the two eyes, referred to as binocular parallax. In stereoscopic vision, the brain uses binocular disparity to extract depth information from 2D retinal images.

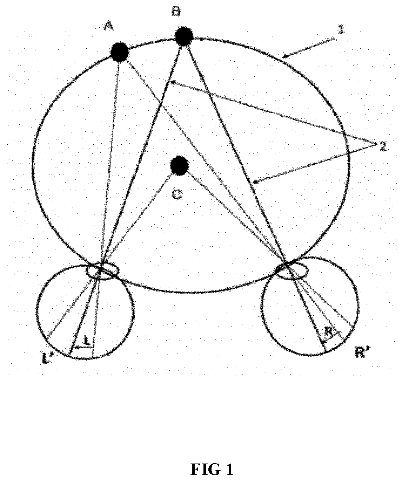

As shown in FIG 1, where 1 represents the binocular horizon and 2 represents the visual axis, if the two eyes focus on the *(Horopter)* fixation points A and B on the binocular horizon, the angle between the visual axes projected to the image on the left and right retinas are the same size, L and R, respectively, means that the images on the retinas of the two eyes overlap and there is no disparity. However, when one of the focal points of the two eyes is the fixation point A on the monoscopic horizon and the other is focused on the fixation point C outside the monoscopic horizon, the visual axis angle of the image projected on the left and right retinas is not the same, and they are L' and R'. At this time, the difference between the positions of the images on the left and right retinas cannot be overlapped, and disparity is formed.

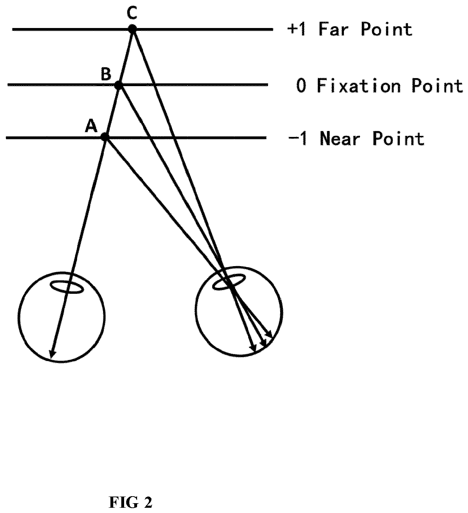

As shown in FIG 2, when one binocular fixation point is on the binocular horizon (A) and the other fixation point is at the near point *(Near Point),* a crossed disparity *(Crossed Disparity)* is formed. Produces the stereoscopic perception of objects approaching the viewer. Conversely, Uncrossed Disparity is formed when one binocular fixation point is on the binocular horizon (C) and the other fixation point is at the far point (Far Point). Produces the stereoscopic perception of objects leaving the viewer.

### 2. Accommodation

The adaptive adjustment of the eyes mainly refers to the active focusing behavior of the eyes. Mainly used for close-range focusing. The focal length of the eye is finely adjusted by changing the curvature of the intraocular lens *(Lens).* When looking at an object, the curvature of the intraocular lens changes so that the eyes can focus on seeing objects at different distances and different parts of the same scene. The adjustment of the lens is achieved through the contraction and relaxation of its attached transcribed muscle.

### 3. Convergence

Depth perception is determined by the direction of eye gaze. Your eyes form an angle when you look at an object. The closer the object is to you, the larger the angle is, and the farther the object is from you, the smaller the angle. As the object moves further and further away from you, the line of sight of the eyes tends to be parallel.

### 4. Motion Disparity

Parallel parallax creates a sense of depth through the relative motion between the observer and the observed object. Close one eye and you can only see the outside world through one eye. Extending your thumb when looking at an object with one eye can block part of your field of view, but when you turn your head, you can see that part of the blocked scene. Specifically, when you use parallel parallax to obtain depth-sensing information, the brain uses calculations to determine the relative distance between you and two objects.

In short, in the process of binocular image fusion, we must first rely on the same convergence mechanism *(Converging Mechanism)* that both eyes observe the scene, that is, the gaze points of both eyes are at the same point. This mechanism makes a person's left and right eyes (the left and right pupil distance of a person is fixed) and the gaze point on the scene geometrically form a definite triangle. Through this triangle, the distance between the observed scene and the human eye can be judged. To complete this task, the muscles of the human eye need to pull the eyeball to rotate, and the activity of the muscle is fed back to the human brain again, so that the parallax images obtained by the eyes are fused in the human brain.

Both glaucoma and macular disease cause localized damage to the retina, where macular disease produces localized retinal damage in the fovea of the retina, and glaucoma produces localized retinal damage in the peripheral area of the fovea. In this way, in the early stage of the disease, maculopathy patients will fail to image the localized central region of the central region within the visual field, while glaucoma will fail to image the localized peripheral region in the peripheral region outside the central region of the visual field. Of course, these are just examples, and there may be various reasons for localized retinal damage, such as the aforementioned glaucoma, macular degeneration, and possibly retinitis pigmentosa, etc., which are not limited in the examples of this application.

In view of this characteristic, the embodiment of the present application proposes a visual function adjustment method and device, and a virtual reality head-mounted display device (HMD). Based on the aforementioned visual imaging principle, physical means are used to visually stimulate the visually imaged retina, thereby stimulating the cortex. Adjustment of visual function to gradually improve or even eliminate the impact of localized retinal damage on visual imaging. The visual function adjustment method and device, and the HMD device proposed in the embodiments of the present application stimulate the retina by means of localized stimulation.

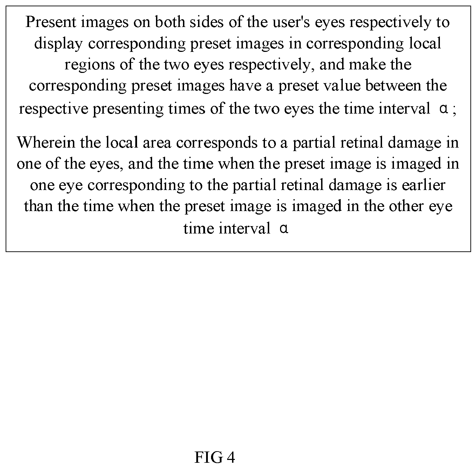

Specifically, the visual function adjustment method, as shown in FIG 4, includes:

> Perform imaging on both eyes of the user to display corresponding preset images in corresponding localized areas of the two eyes respectively, and make the corresponding preset images have a preset time between the respective imaging times of the two eyes interval $\alpha$;

> The localized area corresponds to a subregional retinal damage in one of the eyes, and the time when the preset image is imaged in one eye corresponding to the subregional retinal damage is earlier than the time when the preset image is imaged in the other eye time interval $\alpha$.

Wherein, the corresponding preset image refers to that when the adjustment of the visual function is performed through a plane image, the corresponding preset image refers to the exact same image, that is, the eyes on both sides are, at an interval $\alpha$, the same preset image is displayed. When the adjustment of the visual function is performed by using a stereoscopic image, the corresponding preset images are two images including disparity. This is because in the imaging mechanism of the human cerebral cortex, if the disparity issue is considered, the images displayed on both eyes need to contain a certain disparity to achieve stereoscopic imaging. This principle can refer to the existing production principles for movies in HMD, that is, to allow users to form stereoscopic perception through the HMD, it is necessary to display the video images for both eyes. Only after certain disparity processing is performed on the image, the user can generate a stereoscopic perception when viewing the image; that is, the corresponding preset images with disparity cues are displayed by the two eyes respectively.

For example, an image of an existing HMD simultaneously displays corresponding preset images for both eyes. In the embodiment of the present application, it is necessary to display corresponding preset images at the interval $\alpha$ on both sides of the eyes respectively.

Specifically, when regional retinal damage occurs in one eye, corresponding preset images are displayed on both eyes at the positions corresponding to the regional retinal damage; and the corresponding preset images are displayed on the retinas of both eyes following a sequential order.

The sequential imaging refers to that the retina position corresponding to the area of subregional retinal damage on one eye with subregional retinal damage is imaged first, and the retina corresponding to the area of subregional retinal damage of the first eye is imaged next (this retinal area corresponding to the location of localized retinal damage in the first eye with no or lesser lesions); and the two are shown with an interval $\alpha$.

In this way, the retina for visual imaging can be stimulated, so that the preset image is imaged first in the eye with subregional retinal damage, and then the preset image is presented in the other eye. Due to the visual information processing mechanism of the human eye, it is only necessary to set the time interval $\alpha$ very well, so that the human brain will not feel that the display is successively displayed and cause discomfort, at the same time, this method can well use localized visual stimulation to stimulate the cerebral cortex through the retina. After a period of stimulation, repeated visual stimulation from the retina will repair the cortical areas that cannot normally form neural images within the visual field of the cerebral cortex corresponding to the subregionally damaged area of the retina, thereby gradually improving or even restoring vision.

In the entire text of the embodiments of the present application, the corresponding localized areas of both eyes refer to the same position of both eyes. For example, if a subregional retinal damage occurs in a localized area of one eye, when using the method of the embodiment of the present application to adjust the visual function, the same localized area of the two eyes is used one after the other. The same preset image is displayed with the localized area corresponding to the localized damage to the retina of one of the eyes.

In one embodiment of the present disclosure, a visual function adjustment method is proposed, including:

When both eyes have subregional retinal damage, determine each subregional retinal damage in both eyes separately, and perform the following steps for each subregional retinal damage:

> Perform imaging on both sides of the user's eyes respectively to display corresponding preset images in corresponding localized areas of the two eyes respectively, and make the corresponding preset images have a preset value between the respective imaging times of the two eyes the time interval $\alpha$;

> wherein the localized area corresponds to a subregional retinal damage in one of the eyes, and the time when the preset image is presented in one eye corresponding to the subregional retinal damage is earlier than the time when the preset image is presented in the other eye time interval α;

wherein, the corresponding preset image refers to that when the adjustment of the visual function is performed through a plane image, the corresponding preset image refers to the exact same image, that is, the eyes on both sides are at an interval α as the same preset image is displayed. When the adjustment of the visual function is performed by using a stereoscopic image, the corresponding preset images are two images including disparity. This is because in the imaging mechanism of the human cerebral cortex, if the binocular disparity is considered, the images displayed on both eyes need to contain a certain disparity to achieve stereoscopic imaging. This principle can refer to the existing production principles for movies displayed in HMDs; that is, to allow users to form stereoscopic images through the HMD, it is necessary to display the video for both eyes. Only after certain processing is performed on the image, the user can generate a stereoscopic image when viewing the image; that is, the corresponding preset images containing disparity are displayed by the two eyes respectively.

For example, an image of an existing HMD simultaneously displays corresponding preset images for both eyes. In the embodiment of the present application, it is necessary to display corresponding preset images at the interval α on both sides of the eyes, respectively.

Specifically, when subregional retinal damage occurs in one eye, corresponding preset images are displayed on both eyes at the position corresponding to the subregional retinal damage; and the corresponding preset images are displayed on the retinas of both eyes.

These are sequential binocular images. The sequential imaging refers to that the retinal position corresponding to the area of subregional retinal damage on one eye is imaged first, and the retinal position corresponding to the area of normal or less damaged on another eye is imaged next, i.e., the other eye corresponding to the location of localized retinal damage in the first eye with no or lesser lesions; and the two are shown with an interval α.

In this way, the retina for visual imaging can be stimulated, so that the preset image is presented first in the eye with subregional retinal damage, and then the preset image is presented in the other eye. Due to the visual imaging mechanism of the human eye, it is only necessary to set the time interval α well, so that the human brain will not feel that it is displayed successively, which will cause discomfort. At the same time, this method delivers localized visual stimulation from the retina to stimulate binocular cells in the visual cortex. After a period of stimulation, the retinal visual stimulation will repair the cortical areas that cannot normally form neural images within the visual field of the cerebral cortex corresponding to the subregionally damaged area of the retina, thereby gradually improving or even restoring vision.

In the entire text of the embodiments of the present application, the corresponding localized areas of both eyes refer to the same position of both eyes. For example, if a subregional retinal damage occurs in a localized area of one eye, when using the method of the embodiment of the present application to adjust the visual function, the same localized area of the two eyes is used one after the other. The same preset image is displayed with the localized area corresponding to the localized damage to the retina of one of the eyes.

If there is subregional retinal damage in both eyes, it is necessary to adjust the visual function separately for each subregional retinal damage in both eyes. The treatment method for subregional retinal damage in both eyes can be consistent with the aforementioned case of multiple subregional retinal damage in one eye, that is, visual function adjustment is performed for each subregional retinal damage in turn, or the time interval β is used as a cycle. Visual adjustment was performed on multiple retinal localized lesions in turn.

For example, the user has two subregional retinal damages L1 and L2 in the left eye, and one subregional retinal damage R1 in the right eye; the visual function adjustment at this time can be divided into three stages: the first stage is for the first part of the left eye. Subregional retinal damage L1, the playing time is from t0 to t1; the second segment is for the subregional retinal damage R1 of the right eye, and the playing time is from t1 to t2; the third segment is for the second subregional retinal damage L2 of the left eye, and the playing time is from t1 to t2. t2 to t3. Then go back to the first paragraph.

To improve the effect of visual function adjustment, different preset images can be used for each localized area; that is, different preset images can be used in three segments. To improve the effect of visual function adjustment, a graph sequence can be prepared in advance, and the graph sequence includes the above-mentioned three different preset maps at different positions, so as to adjust the visual function for each subregional retinal damage respectively. In this embodiment of the present application, it can be played in a loop, and the sequence of the three sub-pictures in each loop is not limited in any way. Those skilled in the art can understand that since each sub-image is for different subregional retinal damage, the positions of the preset images displayed are different; at the same time, each sub-image can include multiple sub-images displayed at the same position. Different graph sequences. Of course, the above example is for the case where there are only three subregional retinal lesions, so the graph sequence produced includes three subgraphs; this is just an example. Those skilled in the art can understand that when N subregional retinal lesions are included, the graph sequence may include N segments of sub-images. That is, the method includes:

Determine N localized areas corresponding to the N localized retinal damage areas respectively: the first localized area, the second localized area... the Nth localized area; N≥2;

For two or more of these subregional regions, perform the following steps alternately for each subregional region at alternating time intervals β:

Perform imaging on both eyes of the user to display corresponding preset images in corresponding localized areas of both eyes respectively, and make the corresponding preset images have a preset time between the respective imaging times of the two eyes interval α; Wherein the localized area corresponds to a subregional retinal damage in one of the eyes, and the time when the preset image is imaged in one eye corresponding to the subregional retinal damage is earlier than the time when the preset image is imaged in the other eye. Time interval α; wherein, the alternating time interval β is greater than the preset time interval α.

That is to say, in this embodiment of the present application, the visual function adjustment is performed on the N subregional regions in turn. That is: after the subregional retinal damage area of one eye is divided into N subregional areas, the corresponding preset image is played for the first subregional area in the eye with subregional retinal damage at time t0, and then at time $t0+\alpha$, the corresponding preset image is also played in the first subregional area of the other eye.

Then, for the second subregional area, the corresponding preset image is played in the eye with subregional retinal damage at the $t0+\beta^{th}$ time, and then the corresponding preset image is also presented in the second subregional area of the other eye at the $t0+\beta+\alpha^{th}$ time, and so on. In this way, visual function adjustment can be performed on N localized regions in turn.

Of course, as mentioned above, in order to improve the effect of visual function adjustment, different preset images may be used for each localized area.

In actual use, it is found that there may be only one eye with subregional retinal damage, and there may be subregional retinal damage in both eyes; there may also be an excessive scope of subregional retinal damage in any one eye. There may be a situation where the scope of subregional retinal damage in one eye is too large; in this case, direct localized stimulation to the large-scale subregional retinal damage may lead to unsatisfactory visual function adjustment effects. To this end, an embodiment of the present application proposes a method for adjusting a visual function. Specifically, the visual function adjustment method includes:

Determine the scope of subregional retinal damage in one eye, and divide the scope into N subregional retinal damage areas;

Determine N localized areas corresponding to the N localized retinal damage areas respectively: the first suregional area, the second subregional area... the $N^{th}$ subregional area; N≥2;

For one of these localized areas, perform the following steps:

Perform imaging on both eyes of the user to display corresponding preset images in corresponding localized areas of both eyes respectively, and make the corresponding preset images have a preset time interval α between the respective imaging times of both eyes;

wherein the subregional area corresponds to a subregional retinal damage in one of the eyes, and the time when the preset image is presented in one eye corresponding to the subregional retinal damage is earlier than the time interval α when the preset image is imaged in the other eye.

When the adjustment of the visual function is performed by using a stereoscopic image, the corresponding preset images are two images with disparity. This is because in the imaging mechanism of the human visual cortex, if the disparity issue is considered, the images displayed when imaging both eyes need to contain a certain disparity to achieve stereoscopic perception. This principle can refer to the existing production principles for movies in HMD; that is, in order to allow users to form stereoscopic images through the HMD, it is necessary to display the video for both eyes. Only after certain processing is performed on the image, the user can generate a stereoscopic perception when viewing the image; that is, the corresponding preset images containing disparity are displayed by the two eyes respectively.

For example, an image of an existing virtual reality head-mounted display device simultaneously displays corresponding preset images for both eyes. In the embodiment of the present application, it is necessary to display corresponding preset images at the interval α on both sides of the eyes, respectively.

Specifically, when subregional retinal damage occurs in one eye, corresponding preset images are displayed on both eyes at the position corresponding to the subregional retinal damage; and the corresponding preset pattern is sequentially displayed on the retinas of both eyes.

The sequential imaging refers to that the retina position corresponding to the area of subregional retinal damage on one eye with subregional retinal damage is imaged first, and the retina position corresponding to the area of less damaged or normal on the other eye is imaged next, i.e., the other eye corresponding to the location of localized retinal damage in the first eye with no or lesser lesions; and the two are shown with an interval α.

In this way, the retina for visual imaging can be stimulated, so that the preset image is presented first in the eye with subregional retinal damage, and then the preset image is displayed in the other eye. Due to the visual imaging mechanism of the human eye, it is only necessary to set the time interval α well, so that the human brain will not feel that it is displayed successively, which will cause discomfort. At the same time, this method can well use localized visual stimulation to pass through the retina and stimulate the visual cortex. After a period of repeated stimulation, the retinal visual stimulation will repair the cortical visual areas that cannot form normal neural images within the visual field of the visual cortex corresponding to the subregionally damaged area of the retina, thereby gradually improving or even restoring vision.

In the entire text of the embodiments of the present application, the corresponding localized areas of both eyes refer to the same position of both eyes. For example, if a subregional retinal damage occurs in a localized area of one eye, when using the method of the embodiment of the present application to adjust the visual function, the same localized area of the two eyes is stimulated one after the other. The same preset image is displayed with the localized area corresponding to the localized damage to the retina of one of the eyes.

However, no matter which method is adopted, visual function adjustment can only be performed for one retinal subregional damage in one eye in each time period. This is because the human retinal imaging can only adjust the visual function for one retinal subregional damage in one eye at a time, otherwise the imaging system will be confused. Therefore, after the visual function adjustment of one localized area is completed, the visual function adjustment of another localized area may be performed; and two or more localized areas may be adjusted in turn within the preset time β.

In any embodiment of the present application, if two or more localized retinal damages are determined, that is, two or more localized areas, to improve the effect of visual function adjustment, different preset patterns are used, that is, a preset pattern is determined for each subregional retinal damage.

In an embodiment of the present application, the above method includes the following steps:

determining the scope of the subregional retinal damage in one eye, and using the scope as the subregional retinal damage area to determine the subregional area where the preset map is displayed in both eyes;

perform imaging on both eyes of the user to display corresponding preset images in corresponding localized areas of both eyes respectively, and make the corresponding preset images have a preset time between the respective imaging times of the two eyes interval α;

wherein the localized area corresponds to a subregional retinal damage in one of the eyes, and the time when the preset image is imaged in one eye corresponding to the subregional retinal damage is earlier than the time when the preset image is imaged in the other eye time interval α.

Of course, in addition to the existing steps, the above method may also include other steps, and these other steps may be any one or more steps in other embodiments of the present application, or may not be mentioned in the embodiments of the present application and any steps, and these methods should also fall within the protection scope of the claims of the present application.

wherein, the corresponding preset image refers to that when the adjustment of the visual function is performed through a plane image, the corresponding preset image refers to the exact same image, that is, the eyes on both sides are at the interval α, the same preset map is displayed. When the adjustment of the visual function is performed through a stereoscopic image, the corresponding preset images are two images including disparity. This is because in the imaging mechanism of the human cerebral cortex, if the disparity issue is considered, the images displayed when imaging both eyes need to contain a certain disparity to achieve stereoscopic imaging. This principle can refer to the existing production principles for videos in HMD, in order to allow users to form a three-dimensional perception through the HMD, it is necessary to display images for both sides of the eye. Certain processing is performed to enable the user to generate a stereoscopic image when viewing the image; that is, the corresponding preset images including disparity are displayed on both sides of the eyes respectively.

Of course, the pictures of the existing HMD respectively display corresponding preset pictures for both eyes at the same time. In the embodiment of the present application, it is necessary to display the corresponding preset images at the interval α on both sides of the eyes, respectively.

There may be a situation where the scope of subregional retinal damage in one eye is too large; in this case, direct localized stimulation to the large-scale subregional retinal damage may lead to unsatisfactory visual function adjustment effects. To this end, the embodiment of the present application also proposes another method for adjusting vision, including:

Determine the scope of subregional retinal damage in one eye, and divide the scope into N subregional retinal damage areas; and determine a subregional area for displaying a corresponding preset map in both eyes for one of the subregional retinal damage areas. That is to say, a relatively large area of subregional retinal damage can be divided into N subregional retinal damage areas, and visual function adjustment is performed only for one of the N subregional retinal damage areas at a time. That is, the method includes:

Determine N localized areas corresponding to the N localized retinal damage areas respectively: the first localized area, the second localized area... the Nth localized area; $N \geq 2$;

For one of these localized areas, perform the following steps:

Perform imaging on both eyes of the user respectively to display the corresponding nth preset image in the corresponding nth subregional regions of the retinas of the two eyes respectively, and make the corresponding nth preset image presentations in the two eyes, respectively. There is a preset time interval $\alpha$ between the times; and the imaging time of the corresponding nth preset image in the corresponding one eye with the $n^{th}$ subregional retinal damage is earlier than that of the corresponding nth preset image in the other eye with time interval $\alpha$; where $1 \leq n \leq N$;

Perform imaging on both eyes of the user to display the corresponding $n+1^{th}$ preset image in the corresponding $n+1^{th}$ localized regions of the retinas of the two eyes respectively, and make the corresponding $n+1^{th}$ preset image. There is a preset time interval $\alpha$ between the respective imaging times of both eyes; and the imaging time of the corresponding $n+1^{th}$ preset image in the corresponding one eye with the $n+1^{th}$ subregional retinal damage is earlier than that of the corresponding $n+1^{th}$ preset map is presented in the other eye by time interval $\alpha$.

In this embodiment of the present application, the visual function adjustment is only performed on one subregional area among the N subregional areas. Of course, after the visual function adjustment is performed on the one subregional area, the visual function adjustment can be performed on another subregional area. That is, the method includes:

For the $n^{th}$ subregional area, imaging is performed on both eyes of the user respectively to display the corresponding $n^{th}$ preset image in the corresponding $n^{th}$ subregional area of the two sides of the eyes, respectively.

After completing the adjustment of the visual function of both sides of the $n^{th}$ subregional area, for the $n+1^{th}$ subregional area, images are presented on both sides of the user's eyes to display the corresponding images in the corresponding $n+1^{th}$ subregional areas of both sides of the eyes.

Of course, visual function adjustment can also be performed on two or more localized areas in turn. That is, the method of the embodiment of the present application includes:

The $n^{th}$ subregional region is imaged on both eyes of the user by the preset device to display the corresponding $n^{th}$ preset image respectively in the corresponding subregional regions of the two eyes, and after the alternating time interval $\beta$ continues, the $n+1^{th}$ The subregional area is imaged on both eyes of the user by the preset device to display the corresponding $n+1^{th}$ preset image in the corresponding subregional area of the two eyes respectively, and last for alternating time intervals $\beta$; where time interval $\alpha \geq$ alternate time interval $\beta$.

That is to say, in this embodiment of the present application, the visual function adjustment is performed on the N subregional regions in turn. That is: after the subregional retinal damage area of one eye is divided into N subregional areas, the corresponding preset image is played for the first subregional area in the eye with subregional retinal damage at time t0, and then at time $t0+\alpha$. The corresponding preset image is also played in the first subregional area of the other eye.

Then, for the second subregional area, the corresponding preset image is played in the eye with subregional retinal damage at the $t0+\beta^{th}$ time, and then the corresponding preset image is also played in the second subregional area of the other eye at the $t0+\beta+\alpha^{th}$ time, and so on. In this way, visual function restoration can be performed on N localized regions in turn.

Of course, the same preset pattern can be used for each localized area. That is, the $n^{th}$ preset image is the same as the $n+1^{th}$ preset image and has a different location. Or, in order to improve the effect of adjusting the visual function, different images may be displayed for each localized area, that is, the images and positions of the $n^{th}$ preset image and the $n+1^{th}$ preset image are different.

For example, determine the scope of localized retinal damage of the user, and then divide the scope of localized retinal damage into two localized areas L1 and L2; at this time, the visual function adjustment can be divided into two sections: the first section is for the first section. The second segment is for the second subregional retinal injury L1, and the playing time is from t0 to t1; while the second segment is for the second subregional retinal injury L2, and the playing time is from t1 to t2. Then go back to the first paragraph, and so on. Wherein, different preset patterns can be used for each localized area; that is, different preset patterns can be used in two sections. In order to improve the effect of visual function adjustment, a graph sequence can be prepared in advance, and the graph sequence includes the above-mentioned two different preset maps at different positions, so as to adjust the visual function for each subregional retinal damage respectively. In this embodiment of the present application, it can be played in a loop, and the sequence of the two sub-pictures in each loop is not limited in any way. Those skilled in the art can understand that since each sub-image is for different subregional retinal damage, the positions of the preset images displayed are different; at the same time, each sub-image can include multiple sub-images displayed at the same position. Different graph sequences.

In view of this characteristic, the embodiment of the present application proposes a visual function adjustment method and device using a graph sequence, and a HMD. Based on the aforementioned visual imaging principle, physical means are used to visually stimulate the retina of visual imaging, so as to adjust the cortical visual function to gradually improve or even eliminate the impact of localized retinal damage on visual imaging. The visual function adjustment method and device, and the HMD proposed in the embodiments of the present application stimulate the retina by means of localized stimulation.

Specifically, the visual function adjustment method using the graph sequence, as shown in FIG 4 , includes:

determine the positions of M subregional retinal damages, M≥2; use the graph sequence to respectively perform vision adjustment on the positions of m subregional retinal damages in the M subregional retinal damages, M≥m≥2;

wherein in the graph sequence At least m sub-image sequences are included, and each sub-image sequence in the m-segment sub-image sequence corresponds to one subregional retinal injury among M subregional retinal injuries;

The visual adjustment is performed on the positions of m subregional retinal lesions among the M subregional retinal lesions by using a graph sequence, including:

using the image sequence to perform imaging on both eyes of the user, respectively, to display the corresponding preset images in the corresponding subregional regions of the two eyes, respectively,

wherein the localized area corresponds to a subregional retinal damage in one of the eyes, and the time when the preset image is imaged in one eye corresponding to the subregional retinal damage is earlier than the time when the preset image is imaged in the other eye time interval $\alpha$.

wherein, the corresponding preset image refers to that when the visual function adjustment is performed through a plan view, the corresponding preset image refers to the exact same image, that is, the eyes on both sides are displayed at the interval $\alpha$ with the same preset map. When the adjustment of the visual function is performed through a stereoscopic image, the corresponding preset images are two images including disparity. This is because in the imaging mechanism of the human cerebral cortex, if the disparity issue is considered, the images displayed when imaging both eyes need to contain a certain disparity to achieve stereoscopic perception. This principle can refer to the existing production principles for videos in HMD; that is, in order to allow users to form a three-dimensional visual perception through the HMD, it is necessary to display images for both sides of the eye. Certain processing is performed to enable the user to generate a stereoscopic image when viewing the image; that is, the corresponding preset images including disparity are displayed on both sides of the eyes respectively.

For example, a picture of an existing HMD displays corresponding preset pictures for both eyes at the same time. In the embodiment of the present application, it is necessary to display the corresponding preset images at the interval $\alpha$ on both sides of the eyes respectively.

Specifically, when subregional retinal damage occurs in one eye, corresponding preset images are displayed on both eyes at the position corresponding to the subregional retinal damage; and the corresponding preset images are sequentially displayed on the retinas of both eyes.

The sequential imaging refers to that the retina position corresponding to the area of subregional retinal damage on one eye with subregional retinal damage is presented first, and the retina corresponding to the area of subregional retinal damage of the first eye is presented on the other eye next, i.e., the other eye corresponding to the location of localized retinal damage in the first eye with no or lesser lesions; and the two are shown with an interval $\alpha$.

In this way, the preset image is first presented in the eye with subregional retinal damage, and then the preset image is imaged in the other eye. Due to the visual imaging mechanism of the human eye, it is only necessary to set the time interval $\alpha$ very well, so that the human brain will not feel that the display is successively displayed and cause discomfort.

In the entire text of the embodiments of the present application, the corresponding localized areas of both eyes refer to the same position of both eyes. For example, if a subregional retinal damage occurs in a localized area of one eye, when using the method of the embodiment of the present application to adjust the visual function, the same localized area of the two eyes is used one after the other. The same preset map is shown with the localized area corresponding to the localized retinal damage in one of the eyes.

In some embodiments, the m subregional retinal lesions are located on one eye, or the m subregional retinal lesions are located on both eyes, respectively. That is to say: there may be only one eye with subregional retinal damage, or there may be subregional retinal damage in both eyes; and there may be too much scope of subregional retinal damage in any one eye. In an embodiment of the present application, the localized area where the preset map is displayed is uniquely corresponding to the position of the subregional retinal damage of one eye. In this way, when the preset map is displayed, the corresponding preset map is displayed in and only in the predetermined area of the two eyes corresponding to the subregional retinal damage, so as to stimulate the two eyes corresponding to the subregional retinal damage position through the preset map. The same localized area of the side eye, so that the corresponding binocular cell neural circuit of the cortex can be regulated to restore visual function; and the area corresponding to the localized retinal damage displayed by the two eyes in each adjustment is the same in both eyes. Of course, it is possible that only one eye in both eyes has a subregional retinal lesion; it is also possible that both eyes have subregional retinal damage, or the same eye has one or more subregional retinal lesions. To this end, the embodiments of the present application propose a variety of solutions, so as to restore the visual function according to different situations of subregional retinal damage.

However, no matter which method is adopted, visual function restoration can only be performed for one retinal subregional damage in one eye in each time period. This is because the human retinal imaging can only adjust the visual function for one retinal subregional damage in one eye at a time, otherwise it will cause confusion in the imaging system. Therefore, after the visual function adjustment of one localized area is completed, the visual function adjustment of another localized area may be performed; and two or more localized areas may be adjusted in turn within the preset time $\beta$.

In any embodiment of the present application, if two or more localized retinal damages are determined, that is, two or more localized areas, in order to improve the effect of visual function adjustment, different localized areas may be damaged. Different preset maps are used, that is, a preset map is determined for each subregional retinal damage.

In some embodiments, the image sequence is used to perform imaging on both sides of the user's eyes respectively, so as to display corresponding preset images in corresponding subregional regions of the two eyes respectively, and make the corresponding preset images. There is a preset time interval $\alpha$ between the respective imaging times of the two eyes, including:

The image sequence is used to perform imaging on both eyes of the user, so as to display the corresponding $n^{th}$ preset image in the corresponding $n^{th}$ subregional regions of the retinas of the two eyes respectively, and make the corresponding nth preset image in the There is a preset time interval $\alpha$ between the respective imaging times of the two eyes; and the imaging time of the corresponding nth preset image in the corresponding one eye with the nth retinal subregional damage is longer than that of the corresponding nth preset image. The image is imaged in the other eye earlier than the time interval $\alpha$; where $1 \leq n \leq m$;

Perform imaging on both eyes of the user to display the corresponding n+1th preset image in the corresponding $n+1^{th}$ localized regions of the retinas of the two eyes respectively, and make the corresponding $n+1^{th}$ preset image. There is a preset time interval $\alpha$ between the respective imaging times of both eyes; and the imaging time of the corresponding $n+1^{th}$ preset image in the corresponding one eye with the $n+1^{th}$ subregional retinal damage is earlier than that of the corresponding $n+1^{th}$ preset map presented in the other eye by time interval $\alpha$.

When performing visual function adjustment, a graph sequence can be used to first perform visual function adjustment for a localized area, and then perform visual function adjustment for another localized area after completing the visual function adjustment of the localized area, that is, the method includes:

For the $n^{th}$ subregional area, imaging is performed on both eyes of the user respectively to display the corresponding $n^{th}$ preset image in the corresponding $n^{th}$ subregional area of the two sides of the eyes respectively;

After completing the adjustment of the visual function of both sides of the $n^{th}$ subregional area, for the $n+1^{th}$ subregional area, imaging is performed on both sides of the user's eyes to display the corresponding images in the corresponding $n+1^{th}$ subregional areas of both sides of the eyes.

When restoring the visual function, the visual function restoration can also be performed for each localized area in turn by using a graph sequence, that is, the method includes:

For the $n^{th}$ subregional area, the user's eyes are imaged respectively to display the corresponding nth preset images in the corresponding subregional areas of the two eyes, and after the alternating time interval $\beta$, the $n+1^{th}$ subregional area is passed through. The preset device performs imaging on the user's eyes respectively to display the corresponding $n+1^{th}$ preset image in the corresponding subregional regions of the two eyes, and continues the alternating time interval $\beta$;

where time interval $\alpha \geq$ alternate time interval $\beta$.

wherein, the sub-images for each localized area in the image sequence may be the same or different, that is: the $n^{th}$ preset image is the same as the image of the $n+1^{th}$ preset image but in different positions; or, the $n^{th}$ preset image map and the $n+1^{th}$ preset map are different in both the map and the position.

In yet another embodiment of the present application, based on the solution of using a video stream for visual function adjustment proposed in the aforementioned method, one or more consecutive frames of a predetermined image are added at a predetermined position in the video stream: for example, a blank frame, Or a frame with a predetermined logo image. Adding frames with a predetermined map can provide a buffer for retinal imaging, and can also be used as an interpolation to increase the number of frames in the video stream.

In all the embodiments of the present application, since the ordinary video stream is generally 24 or 25 frames per second or other predetermined frame numbers, if a HMD (such as 3D glasses) is used to play the video, the current Mainstream 3D glasses are 90-120 frames per second. Interpolating between the frames of the video stream at this point can turn a video stream of 24 or 25 frames per year into a video stream of 90-120 frames per second.

In any of the embodiments of the present application, the time interval a is 8.33 milliseconds. The reason for this setting is that the method of the present application can be implemented by using 3D glasses, because 3D glasses have a natural advantage and can limit the field of view of each glasses of a person to a specific area, which can prevent peripheral light from looking at each other. The function adjustment process has an impact; at the same time, the working principle of the 3D glasses is to display images for both eyes separately, so that visual stimulation can be separately applied to the left and right eye channels to realize any of the solutions in the embodiments of the present application. For example, using existing 3D glasses with a frequency of 120 Hz, the minimum time interval shown in the figure is 1/120 of a second, that is, 8.33 milliseconds. Of course, the time interval $\alpha$ can be adjusted according to the operating frequency of the device. Of course, it is not necessary that the limited time interval $\alpha$ must be perfectly corresponding to the operating frequency of the device, and the solution of the embodiment of the present application can also be implemented with a slight difference.

Of course, devices with other structures can also be used to image the eyes respectively; the above-mentioned embodiment using a virtual reality head-mounted display device (eg, HMD) for illustration is just an example.

Of course, the aforementioned time interval $\alpha$ of 8.33 milliseconds is only an example, and does not limit the protection scope of the present application. At the same time, the 3D glasses with the working frequency of 120 Hz are just an example, and do not limit the protection scope of the present application. Those skilled in the art can understand that the device for implementing the embodiments of the present application may be any device that can display a preset image, which is not limited in the embodiments of the present application.

In any embodiment of the present application, it also includes:
A prompt is performed when the corresponding preset image or the corresponding preset image sequence is played, and it is determined whether corresponding feedback from the user for the prompt is received.

This mechanism may be referred to as a focus detection mechanism to determine that the user's attention is focused on viewing the preset image. This condition is to prevent users from having problems concentrating during long-term use. Because once the user is inattentive, the played preset image cannot produce a predetermined visual function adjustment visual function adjustment effect.

Wherein, the prompt may be an icon with a direction prompt displayed in a preset diagram, and user feedback on the icon with a direction prompt is received, so as to determine that the user has made correct feedback.

For example, a "convex"-shaped graphic is regularly displayed, and the protrusions of the graphic can be oriented in different directions; the user makes a preset action according to the direction of the protrusions in the graphic (for example, draw a predetermined direction on the touchpad, use the Press the corresponding key on the keyboard with the arrow keys, .......). In one embodiment, the protrusions of the "convex"-shaped figure can be directed to the left or right, and changed in sequence; at the same time, the user can press the left or right mouse button correspondingly.

The prompt can also be a prompt tone that is played on a regular basis, so that the user can give feedback when the prompt tone is heard.

For example: play a prompt tone regularly, and let the user press a preset button after hearing the prompt tone.

In the above solution, whether the user is still concentrating on watching the preset image being played can be determined according to the prompt, so as to prevent invalid playing caused by the user's inattention. Of course, whether it is the aforementioned method of using a prompt tone, a prompt icon or other methods, it is only to determine whether the user is concentrating on watching the preset image being played; these methods are only examples and do not limit the scope of protection of this application..

Because the axial distance of the eyes of different patients is different, it is necessary to specifically determine the corresponding relationship between the position of the subregional retinal damage and the position of the displayed preset map for each user. In any embodiment of the present application, the correspondence between the position of the subregional retinal damage and the position where the preset image is displayed can be obtained by various methods. The following example is given in the embodiment of the present application for illustration:

In this example, the following steps are performed for each eye:

set P points in the non-central area of the visual field of one eye, and the display luminance interval of each point is from no lighting to the maximum luminance;

a center mark is displayed for the central area of the visual field of one eye of the user, and the user is asked to look at the center mark;

then at any point of the P points, the initial luminance (for example, the center value of the display luminance interval) is used as the display Luminance, the point is lit to determine whether the user sees the point is lit; if it is seen, the display luminance is reduced by the first preset step; if not seen, the second preset step is used. Increase the display luminance for a long time; and when the same point can be seen under the current display luminance, but cannot be seen after adjusting the display luminance, the current first preset step size or the second preset step size become smaller and re-test;

By continuously adjusting the display luminance repeatedly, the contrast difference value at this point can be determined; and the exit condition can be that the test reaches a predetermined number of times or the adjustment step becomes the minimum adjustment step.

The minimum adjustment step size may be predetermined, or determined depending on the adjustable parameters of the device, or determined in any other feasible manner.

After the above steps are performed on the P points of each eye, the respective contrast difference values of the P points corresponding to the two eyes can be determined, and the point with the largest contrast difference value among the P points can be used as the depending on the site of functional adjustment.

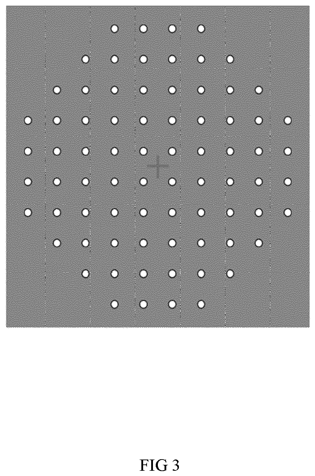

For example, the center mark and P points as shown in FIG 3 can be used, P=76; and the display luminance interval of each point is from no lighting to the maximum luminance value, which is marked with 0 and unlit, and marked with 1. The maximum value of luminance, and the luminance values in all embodiments of the present application are relative values based on the display luminance interval. Do the following steps for each eye:

Step 1. Only the central fixation point is displayed, and the user is looking at the red cross at the central fixation point;

Step 2. One of the 76 white spots appear randomly for 500 milliseconds, and the baseline luminance value at the first appearance is 50% of the highest luminance value, that is, 0.5. The patient clicks any button on the mouse to report that a light spot is detected. If no key is pressed within 500 ms, it means that no light spot is detected; the luminance decreases by one step when the detected light spot appears next time, and increases by one step when the undetected light spot appears next time. For each light spot, the initial step size is 0.1. When the same light spot changes from detected to undetected, the step size of this light spot is halved; when each light spot is tested more than 15 times or the step size becomes When the test ends at 1, the contrast value of each light point is the contrast threshold of the changed point;

Step 3. After the contrast threshold detection of the respective 76 visual field points of the left eye and the right eye is completed, select the point with the largest contrast threshold difference at the same position of the left eye and the right eye, and record its coordinates as the visual stimulus point.

In the above manner, the corresponding relationship between the position of the user's retinal damage and the position where the preset image is displayed can be determined, so as to determine the position where the preset image is displayed.

Of course, the above-mentioned method for determining localized retinal damage is just an example, which is a relatively accurate and repeatable manner. Those skilled in the art can understand that other methods can also be used to determine. For example: displaying a subregional map at different positions within the visual field of the user's monocular, and judging whether the user sees the subregional map, so as to determine the location of subregional retinal damage; that is, the exhaustive method. Another example: the retinal map can be used to determine the location of localized retinal damage. There are many ways to determine localized retinal damage in current clinical medicine, and in this way, the localized area where the preset image is displayed can be determined correspondingly; therefore, the position of the localized area where the preset image is displayed can be determined in many ways.

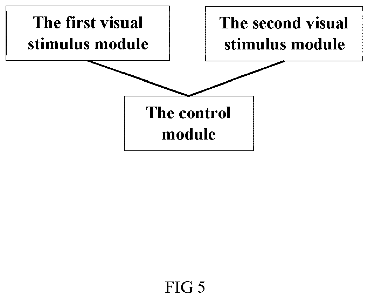

As shown in FIG 5 , an embodiment of the present application further proposes a visual function adjustment device, including: a first imaging mechanism for imaging the left eye, a second imaging mechanism for imaging the right eye, and a device for controlling a control mechanism for the first imaging mechanism and the second imaging mechanism;

wherein, the control mechanism is connected with the first imaging mechanism and the second imaging mechanism to perform imaging on both eyes of the user respectively, so as to display corresponding preset images in corresponding subregional regions of the two eyes respectively, and make the corresponding preset map has a preset time interval $\alpha$ between the respective imaging times of the two eyes;

wherein the localized area corresponds to a subregional retinal damage in one of the eyes, and the time when the preset image is imaged in one eye corresponding to the subregional retinal damage is earlier than the time when the preset image is imaged in the other eye time interval $\alpha$.

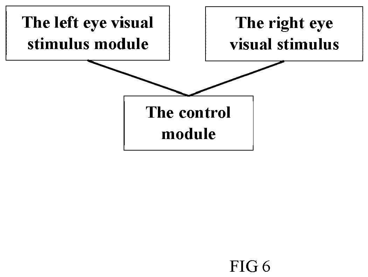

As shown in FIG 6, an embodiment of the present application further proposes a virtual reality head-mounted display device, including: a left-eye imaging mechanism for imaging the left eye, a right-eye imaging mechanism for imaging the right eye, a control mechanism for controlling the left-eye imaging mechanism and the right-eye imaging mechanism;

The control mechanism is connected to the left-eye imaging mechanism and the right-eye imaging mechanism to perform imaging on both eyes of the user respectively, so as to display corresponding preset images in corresponding subregional regions of the two eyes respectively, and make the corresponding preset map has a preset time interval $\alpha$ between the respective imaging times of the two eyes;

wherein the localized area corresponds to a subregional retinal damage in one of the eyes, and the time when the preset image is presented in one eye corresponding to the subregional retinal damage is earlier than the time when the preset image is imaged in the other eye by time interval $\alpha$.

Those skilled in the art can understand that the visual function adjustment device shown in FIG 5 and the virtual reality head-mounted display device shown in FIG 6 in the embodiment of the present application can be used in any of the foregoing embodiments. Therefore, the principles, functions, and execution steps of the visual function adjustment device and the virtual reality head-mounted display device in the embodiments of the present application are all corresponding to the visual function adjustment method in any of the foregoing embodiments. Therefore, it will not be repeated here.

The above are the preferred embodiments of the present application. It should be pointed out that for those skilled in the art, without departing from the principles described in the present application, several improvements and modifications can also be made. These improvements and modifications It should also be regarded as the protection scope of this application.

**Claims**

1. A method for adjusting visual function, comprising:

   presenting a same preset image on a same subregional retinal area of each of the two eyes of a user respectively; and the preset image being presented to the same subregional retinal of each of the eyes respectively with a preset time interval $\alpha$;
   wherein the subregional retinal area corresponds to a subregional retinal injury in one eye, and a time the preset image is presented on the subregional retinal area of the eye corresponding to the subregional retinal injury area is earlier than a time the preset image is presented on the same subregional retinal area of the other eye with the time interval $\alpha$.

2. The method for adjusting visual function according to claim 1, the presenting the same preset image includes:

   presenting two streams on the same subregional retinal area of both the eyes of the user respectively; wherein the two streams are the same streams constructed by frames, and each of the corresponding frames of the two streams is presented with the time interval $\alpha$; and each of the corresponding frames of the two streams is a same preset image;
   so that the each of the frames of the two streams is presented to the same subregional retinal area of the respective eyes, the subregional retinal area corresponds to a subregional retinal injury in one of the eyes, and each of the same frame of the streams is presented to the same subregional retinal area of both the eyes of the user respectively with the time interval $\alpha$.

3. The method for adjusting visual function according to claim 1 or 2, comprising:
   determining a working frequency $f$ of a device for presenting the preset images, and determining the time interval $\alpha$ according to $f$; where $\alpha = n * 1/f$; $n \geq 1$.

4. The method for adjusting visual function according to any one of the claims 1 to 3, wherein the subregional retinal area is determining by steps of:

   determining P points within non-fovea area of the visual field of one eye of the visual field of an eye, and determining luminance interval of each of the P points;
   presenting a center mark on the fovea area of the visual field of one eye; wherein the center mark is a mark that the user focus;

adjusting continuously the luminance of a point of the P points to determine the luminance threshold of the vision of the user; and

determining the subregional retinal area corresponding to subregional retinal injury area according to the difference between the luminance threshold of the vision of the same subregional retinal area of the two eyes.

5. The method for adjusting visual function according to any one of the claims 1 to 4, comprising:
in response to that the each of the two eyes comprising a subregional retinal injury area respectively, the method comprising:

determining a subregional retinal area corresponding to a subregional retinal injury area of one eye, determining a subregional retinal area in each of the two eyes corresponding to the subregional retinal injury area of one eye as a first subregional retinal area; and determining a first preset image being presented to the first subregional retinal area of each of the two eyes respectively;

determining a subregional retinal area corresponding to a subregional retinal injury area of the other eye, determining a subregional retinal area in each of the two eyes corresponding to the subregional retinal injury area of the other eye as a second subregional retinal area; and determining a second preset image being presented to the second subregional retinal area of each of the two eyes respectively;

performing following steps on the first subregional retinal area and the second subregional retinal area respectively:

presenting the first preset image on the first subregional retinal area of each of the two eyes, wherein the first preset image is presented on the first subregional retinal area of each of the two eyes with a preset time interval $\alpha$; and a time the first preset image is presented on the first subregional retinal area of one eye corresponding to the subregional retinal injury area is earlier than a time the first preset image is presented on the first subregional retinal area of the other eye with a time interval $\alpha$; and

presenting the second preset image on the second subregional retinal area of each of the two eyes, wherein the second preset image is presented on the second subregional retinal area of each of the two eyes with the time interval $\alpha$; and a time the second preset image is presented on the second subregional retinal area of the other eye corresponding to the subregional retinal injury area is earlier than a time the second preset image is presented on the second subregional retinal area of the one eye with the time interval $\alpha$.

6. The method for adjusting visual function according to claim 5, comprising:

for the first subregional retinal area, presenting the first preset image on the first subregional retinal area of each of the two eyes; and after presenting the first preset image for adjusting visual function for both the two eyes, for the second subregional retinal area, presenting the second preset image on the second subregional retinal area of each of the two eyes of the user.

7. The method for adjusting visual function according to claim 5 or 6, comprising:

for the first subregional retinal area, continually presenting, by a preset apparatus the first preset image on the first subregional retinal area of each of the two eyes for a switching time interval $\beta$; and then for the second subregional retinal area, continually presenting, by a preset apparatus the second preset image on the second subregional retinal area of each of the two eyes for the switching time interval $\beta$;
wherein the time interval $\alpha \geq$ the switching time interval $\beta$.

8. The method for adjusting visual function according to any one of claims 5 to 7, comprising:

the first preset image is identical to the second preset image and is in a different subregional retinal area from the second preset image;
or
the first preset image is an image different from the second preset image in different subregional retinal area.

9. The method for adjusting visual function according to any one of claims 1 to 4, comprising:

determining a retinal injury area in one eye, dividing the subregional retinal injury area into N subregional retinal injury areas;
for each of the N subregional retinal injury areas, determining subregional retinal areas corresponding to the N subregional retinal injury areas respectively, comprising: a first subregional retinal area, a second subregional retinal area, ...... a N $^{th}$ subregional retinal area;
for a subregional retinal injury area, performing the following steps:

presenting the same preset image on the subregional retinal area of each of the two eyes of a user respectively; and the preset image being presented to the same subregional retinal of each of the eyes respectively with a preset time interval $\alpha$;
wherein the subregional retinal area corresponds to a subregional retinal injury in one eye, and a time the preset image is presented on the subregional retinal area of the eye corresponding to the subregional retinal injury area is earlier than a time the preset image is presented on the same subregional retinal area of the other eye with the time interval $\alpha$.

10. The method for adjusting visual function for multiple areas according to claim 9, wherein the step of the presenting the same preset image on the subregional retinal area of each of the two eyes of a user respectively; and the preset image being presented to the same subregional retinal of each of the eyes respectively with a preset time interval $\alpha$ includes:

presenting the $n^{th}$ preset image on the $n^{th}$ subregional retinal area of each of the two eyes of the user respectively; the $n^{th}$ preset image being presented to the $n^{th}$ subregional retinal area of each of the eyes respectively with a preset time interval $\alpha$; and the time the corresponding $n^{th}$ preset image being presented on the eye comprising the n subregional retinal injury area is earlier than the time the corresponding $n^{th}$ preset image being presented on the other eye with a preset time interval $\alpha$; wherein $1 \leq n \leq N$; and presenting the $n+1^{th}$ preset image on the $n+1^{th}$ subregional retinal area of each of the two eyes of the user respectively; the $n+1^{th}$ preset image being presented to the $n+1^{th}$ subregional retinal area of each of the eyes respectively with a preset time interval $\alpha$; and the time the corresponding $n+1^{th}$ preset image being presented on the eye comprising the $n+1^{th}$ subregional retinal injury area is earlier than the time the corresponding $n+1^{th}$ preset image being presented on the other eye with a preset time interval $\alpha$.

11. The method for adjusting visual function for multiple areas according to claim 10, comprising:

for the $n^{th}$ subregional retinal area presenting the $n^{th}$ preset image on the $n^{th}$ subregional retinal area of each of the two eyes of the user respectively; and
after finishing the adjusting for the $n^{th}$ subregional retinal area; for the $n+1^{th}$ subregional retinal area, presenting the $n+1^{th}$ preset image on the $n+1^{th}$ subregional retinal area of each of the two eyes of the user respectively.

12. The method for adjusting visual function for multiple areas according to claim 10, t comprising:

for the $n^{th}$ subregional retinal area, continually presenting, by a preset apparatus the $nth$ preset image on the $n^{th}$ subregional retinal area of each of the two eyes of the user respectively for a switching time interval $\beta$; and
for the $n+1^{th}$ subregional retinal area, continually presenting, by a preset apparatus the $n+1^{th}$ preset image on the $n+1^{th}$ subregional retinal area of each of the two eyes of the user respectively for a switching time interval $\beta$;
wherein the time interval $\alpha \geq$ the switching time interval $\beta$.

13. The method for adjusting visual function for multiple areas according to claim 10, comprising:

for the $n^{th}$ subregional retinal area, continually presenting, by a preset apparatus the $n^{th}$ preset image on the $n^{th}$ subregional retinal area of each of the two eyes of the user respectively for a switching time interval $\beta$; and
for the $n+1^{th}$ subregional retinal area, continually presenting, by a preset apparatus the $n+1^{th}$ preset image on the $n+1^{th}$ subregional retinal area of each of the two eyes of the user respectively for a switching time interval β;
wherein the time interval $\alpha \geq$ the switching time interval $\beta$.

14. The method for adjusting visual function for multiple areas according to claim 1, comprising:

determining $M$ subregional retinal injury areas, $M \geq 2$; performing visual adjustment for each of $m$ subregional retinal injury areas by an image query, $M \geq m \geq 2$: wherein the image query comprises at least $m$ image subqueries, and each of the $m$ image subqueries corresponds to each of the M subregional retinal injury areas;
wherein the performing visual adjustment for each of m subregional retinal injury areas by an image query, comprises:

presenting each preset image of the image query on the corresponding subregional retinal area of the each of the two eyes, and each preset image being presented on each of the two eyes with a preset time interval $\alpha$;
wherein the subregional retinal area corresponds to a subregional retinal injury area of one eye, and a time a preset image is presented on the eye comprising the subregional retinal injury area is earlier than a time the preset image is presented on the other eye with a preset time interval $\alpha$.

15. The method for adjusting visual function for multiple areas by an image query according to claim 14, wherein
the $m$ subregional retinal injury areas are on one eye; or the $m$ subregional retinal injury areas are on two eyes.

16. The method for adjusting visual function for multiple areas by an image query according to claim 14 or 15, wherein the step of the presenting each preset image of the image query on the corresponding subregional retinal area of the each of the two eyes, and each preset image being presented on each of the two eyes with a preset time interval $\alpha$ includes:

   presenting a $n^{th}$ preset image of the image query on the corresponding subregional retinal area of the each of the two eyes, and the $n^{th}$ preset image being presented on each of the two eyes with a preset time interval $\alpha$; wherein the subregional retinal area corresponds to a subregional retinal injury area of one eye, and a time a preset image is presented on the eye comprising the subregional retinal injury area is earlier than a time the preset image is presented on the other eye with a preset time interval $\alpha$.
   for the $nth$ subregional retinal area, continually presenting, by a preset apparatus the $n^{th}$ preset image on the $n^{th}$ subregional retinal area of each of the two eyes of the user respectively for a switching time interval $\beta$; and
   for the $n+1^{th}$ subregional retinal area, continually presenting, by a preset apparatus the $n+1^{th}$ preset image on the $n+1^{th}$ subregional retinal area of each of the two eyes of the user respectively for a switching time interval $\beta$;
   wherein the time interval $\alpha \geq$ the switching time interval $\beta$.

17. The visual function adjustment method using a graph sequence according to claim 16, wherein the method comprises:

   For the nth subregional area, the user's eyes are imaged respectively to display the corresponding nth preset images in the corresponding subregional areas of the two eyes respectively, and after the alternating time interval $\beta$ is continued, the $n+1^{th}$ subregional area is passed through. The preset device performs imaging on the user's eyes respectively to display the corresponding $n+1^{th}$ preset image in the corresponding localized areas of the two eyes, and continues the alternating time interval $\beta$; where time interval $\alpha \geq$ alternate time interval $\beta$.

18. The visual function adjustment method using a graph sequence according to any one of claims 14-5, wherein the method comprises:
Each of the graph sequences has interpolated frames, and the corresponding interpolated frames of the graph sequences of the two eyes have the same time interval $\alpha$ between them.

**FIG 1**

+1 Far Point

0 Fixation Point

−1 Near Point

**FIG 2**

FIG 3

Present images on both sides of the user's eyes respectively to display corresponding preset images in corresponding local regions of the two eyes respectively, and make the corresponding preset images have a preset value between the respective presenting times of the two eyes the time interval α ;

Wherein the local area corresponds to a partial retinal damage in one of the eyes, and the time when the preset image is imaged in one eye corresponding to the partial retinal damage is earlier than the time when the preset image is imaged in the other eye time interval α

FIG 4

| The first visual stimulus module | The second visual stimulus module |
|---|---|

The control module

FIG 5

| The left eye visual stimulus module | The right eye visual stimulus |
|---|---|

| The control module |
|---|

FIG 6

## INTERNATIONAL SEARCH REPORT

| International application No. |
| --- |
| **PCT/CN2020/125906** |

**A.    CLASSIFICATION OF SUBJECT MATTER**

A61H 5/00(2006.01)i

According to International Patent Classification (IPC) or to both national classification and IPC

**B.    FIELDS SEARCHED**

Minimum documentation searched (classification system followed by classification symbols)

A61H5/-;; A61F9/-;; A61B3/-;; G02B27/-

Documentation searched other than minimum documentation to the extent that such documents are included in the fields searched

Electronic data base consulted during the international search (name of data base and, where practicable, search terms used)

CNPAT, CNKI, WPI, EPODOC: 视力, 视觉, 视功能, 损害, 损伤, 受损, 优势, 劣势, 弱势, 弱视, 主视, 眼, 显示, 图像, 刺激, 成像, 早, 先, 前, 目, 左, 右, 两, 双, amblyop+, weak sight, eye+, vision?, visual, damag+, lesion, display+, imag+, stimulat+, earlier, advance, ahead, left, right

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 110812145 A (JINGZHUN SHIGUANG (BEIJING) MEDICAL TECHNOLOGY CO., LTD.) 21 February 2020 (2020-02-21) claims 1-3,8, description paragraphs [0041]-[0098], figures 1-6 | 1-4 |
| PX | CN 110850596 A (JINGZHUN SHIGUANG (BEIJING) MEDICAL TECHNOLOGY CO., LTD.) 28 February 2020 (2020-02-28) claims 1-6, description paragraphs [0046]-[0117], figures 1-6 | 1-8 |
| PX | CN 110812146 A (JINGZHUN SHIGUANG (BEIJING) MEDICAL TECHNOLOGY CO., LTD.) 21 February 2020 (2020-02-21) description, paragraphs [0048]-[0137], and figures 1-6 | 1-4, 9-13 |
| PX | CN 110882139 A (JINGZHUN SHIGUANG (BEIJING) MEDICAL TECHNOLOGY CO., LTD.) 17 March 2020 (2020-03-17) description, paragraphs [0046]-[0119], and figures 1-6 | 1-4,14-18 |
| X | CN 103239347 A (PEKING UNIVERSITY) 14 August 2013 (2013-08-14) description, paragraphs [0038]-[0088], figures 1-5(c) | 1-3 |

☑ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 January 2021** | **29 January 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2020/125906** |

**C.    DOCUMENTS CONSIDERED TO BE RELEVANT**

| Category* | Citation of document, with indication, where appropriate, of the relevant passages | Relevant to claim No. |
|---|---|---|
| X | CN 107929006 A (GUANGZHOU SHIJING MEDICAL SOFTWARE CO., LTD.) 20 April 2018 (2018-04-20)<br>    description, paragraphs [0046]-[0087], and figures 1-5 | 1-3 |
| X | CN 107920244 A (GUANGZHOU SHIJING MEDICAL SOFTWARE CO., LTD.) 17 April 2018 (2018-04-17)<br>    description, paragraphs [0106],[0117], figure 9 | 1-3 |
| A | CN 108852766 A (SHANDONG KANKAN EYESIGHT CORRECTION TECHNOLOGY CO., LTD.) 23 November 2018 (2018-11-23)<br>    entire document | 1-18 |
| A | US 2016057410 A1 (INNOLUX CORPORATION) 25 February 2016 (2016-02-25)<br>    entire document | 1-18 |
| A | CN 1617698 A (NOVAWISEN CORP.) 18 May 2005 (2005-05-18)<br>    entire document | 1-18 |

Form PCT/ISA/210 (second sheet) (January 2015)

**INTERNATIONAL SEARCH REPORT**
Information on patent family members

| International application No. |
| --- |
| **PCT/CN2020/125906** |

| Patent document cited in search report | | | Publication date (day/month/year) | Patent family member(s) | | | Publication date (day/month/year) |
| --- | --- | --- | --- | --- | --- | --- | --- |
| CN | 110812145 | A | 21 February 2020 | None | | | |
| CN | 110850596 | A | 28 February 2020 | None | | | |
| CN | 110812146 | A | 21 February 2020 | None | | | |
| CN | 110882139 | A | 17 March 2020 | None | | | |
| CN | 103239347 | A | 14 August 2013 | CN | 103239347 | B | 13 May 2015 |
| CN | 107929006 | A | 20 April 2018 | None | | | |
| CN | 107920244 | A | 17 April 2018 | None | | | |
| CN | 108852766 | A | 23 November 2018 | None | | | |
| US | 2016057410 | A1 | 25 February 2016 | US | 10003788 | B2 | 19 June 2018 |
| | | | | TW | 201608871 | A | 01 March 2016 |
| | | | | TW | I559730 | B | 21 November 2016 |
| CN | 1617698 | A | 18 May 2005 | AU | 2002238539 | B2 | 24 January 2008 |
| | | | | CA | 2475042 | A1 | 14 August 2003 |
| | | | | EP | 1471865 | A1 | 03 November 2004 |
| | | | | US | 7367671 | B2 | 06 May 2008 |
| | | | | JP | 4137798 | B2 | 20 August 2008 |
| | | | | WO | 03065964 | A1 | 14 August 2003 |
| | | | | CA | 2475042 | C | 10 May 2011 |
| | | | | CN | 100431511 | C | 12 November 2008 |
| | | | | AU | 2002238539 | A1 | 02 September 2003 |
| | | | | US | 2005213033 | A1 | 29 September 2005 |
| | | | | JP | 2005516679 | A | 09 June 2005 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911139300
- CN 201911140281X
- CN 201911140282
- CN 201911140283